# EUROPÄISCHE PATENTSCHRIFT

(11) **EP 4 237 384 B1**
(45) Veröffentlichungstag und Bekanntmachung des Hinweises auf die Patenterteilung: **16.10.2024**
(21) Anmeldenummer: 21799252.8
(22) Anmeldetag: 25.10.2021
(51) Int. Cl.: C03C 17/36, C03C 23/00, F21V 7/22, G02B 5/00, H01K 1/00

(54) **STRAHLERBAUTEIL MIT EINER REFLEKTORSCHICHT SOWIE VERFAHREN FÜR SEINE HERSTELLUNG**
EMITTER COMPONENT WITH A REFLECTIVE LAYER, AND METHOD FOR PRODUCING SAME
ÉLÉMENT ÉMETTEUR DOTÉ D'UNE COUCHE RÉFLÉCHISSANTE ET SON PROCÉDÉ DE PRODUCTION

(30) Priorität: 28.10.2020 DE 102020128337
(43) Veröffentlichungstag der Anmeldung: 06.09.2023
(73) Patentinhaber: Excelitas Noblelight GmbH, 63450 Hanau (DE)
(72) Erfinder: WEISS, Oliver, 63801 Kleinostheim (DE)
(74) Vertreter: Mewburn Ellis LLP
(86) Internationale Anmeldenummer: PCT/EP2021/079502
(87) Internationale Veröffentlichungsnummer: WO 2022/090134

(56) Entgegenhaltungen:
- DE-A1- 102006 062 166
- DE-A1- 102011 012 363
- DE-A1- 102015 113 766

## Beschreibung

### Technischer Hintergrund

Die Erfindung betrifft ein Verfahren zur Herstellung eines Strahlerbauteils mit einem Reflektor.

Außerdem geht es in der Erfindung um ein Strahlerbauteil mit einem Basiskörper, dessen Oberfläche mindestens teilweise mit einem Reflektor belegt ist.

Bei der Lampen- und Reflektorfertigung werden optische Strahler zur Minimierung von Strahlungsverlusten häufig mit einem Reflektor versehen. Dabei spielen die zeitliche Konstanz und der Wirkungsgrad der emittierten optischen Leistung eine wichtige Rolle.

### Stand der Technik

Die Oberflächen hochwertiger Reflektoren, die in chemisch aggressiver Umgebung eingesetzt werden können, ohne dass das Reflektormaterial Schaden nimmt und der Reflexionsgrad schnell nachlässt, bestehen häufig aus Gold. Ein derartiges Strahlerbauteil in Form eines mit einem Goldreflektor ausgestatteten Infrarot-Flächenstrahlers ist aus der DE 40 22 100 C1 bekannt. Der Flächenstrahler und ist aus mehreren nebeneinander angeordneten Lampenrohren aus Quarzglas zusammengesetzt, die auf einer gemeinsamen Trägerplatte aus Quarzglas montiert sind. Die Oberseite dieser Lampenrohranordnung bildet die Abstrahlfläche des Infrarot-Flächenstrahlers. Die freie Unterseite der gegenüberliegend davon angeordneten Quarzglas-Trägerplatte ist mit einer Reflektorschicht aus Gold versehen.

In der DE 198 22 829 A1 ist ein kurzwelliger Infrarotstrahler beschrieben, bei dem das Lampenrohr in Form eines sogenannten Zwillingsrohres ausgeführt ist. Hierbei ist ein Quarzglas-Hüllrohr durch einen Längssteg in zwei parallel zueinander verlaufende Teilräume unterteilt, wobei in einem oder in beiden Teilräumen eine Heizwendel verläuft. Die der Hauptabstrahlrichtung der IR-Strahlung abgewandte Seite des Zwillingsrohres ist mit einer Goldschicht belegt, die als Reflektor dient.

Reflektorschichten aus Gold zeichnen sich durch hohe Reflektivität aus; sie sind jedoch nur eingeschränkt temperatur- und temperaturwechselbeständig. Außerdem nimmt die Reflexion im UV-Bereich deutlich ab.

Die Nachteile der eingeschränkten Temperaturstabilität und geringen Reflektivität im UV-Bereich vermeidet eine in der DE 10 2004 051 846 A1 beschriebene, diffus reflektierende Reflektorschicht aus mindestens teilweise opakem Quarzglas, die auch unter der Bezeichnung "QRC" (Quartz Reflective Coating) bekannt geworden ist. Die Herstellung der QRC-Reflektorschicht erfolgt mittels eines Schlickerverfahrens, bei dem ein hoch gefüllter, gießfähiger, wässriger SiO₂-Schlicker erzeugt wird, der amorphe SiO₂-Teilchen enthält. Dieser wird als Schlickerschicht auf dem Quarzglas-Basiskörper aufgetragen, und anschließend wird die Schlickerschicht getrocknet und unter Ausbildung einer mehr oder weniger opaken Quarzglasschicht verglast. Zum Auftragen der Schlickerschicht auf dem Basiskörper werden Sprühen, elektrostatisch unterstütztes Sprühen, Fluten, Schleudern, Tauchen und Aufstreichen vorgeschlagen. In der DE 10 2006 062 166 A1 wird auch eine Herstellung der Reflektorschicht aus opakem Quarzglas durch thermisches Spritzen beschrieben.

Die DE 44 40 104 C2 offenbart einen Spiegelrohling aus opakem Quarzglas, dessen Oberfläche thermisch verdichtet, glatt und nicht porös ist. Die verdichtete, transparente Oberflächenschicht hat eine Dicke von beispielsweise 3 mm. Auf der verdichteten Oberflächenschicht kann nach mechanischer Bearbeitung ein reflektierender Belag für einen Spiegel aufgebracht werden.

Die US 3 445 662 A beschreibt einen Infrarotstrahler mit einem Goldreflektor. Der Goldreflektor besteht aus einem metallischen Substrat, einer Diffusionssperrschicht und einer Goldschicht. Die Diffusionssperrschicht kann aus einer und 20nm bis 200nm dicken, dichten SiO₂-Schicht bestehen.

DE 10 2007 030 698 A1 beschreibt einen als Wärmestrahlungsreflektor einsetzbaren Verbundkörper aus einem Basiskörper und einer rissfreien, dichten Versiegelungsschicht. Der Basiskörper besteht aus porösem, opakem Quarzglas; die Versiegelungsschicht wird durch Auftragen und Verglasen eines SiO₂-Schlickers erzeugt und hat eine Dicke von 0,8mm.

Die DE 10 2013 104 466 A1 beschreibt eine UV-Lampe mit einem Lampenrohr, das mit einer Reflektorschicht aus opakem Quarzglas belegt sein kann. Die Schichtdicke liegt zwischen 0,2 und 2mm.

Die DE 10 2015 113766 A1 beschreibt einen Flächenstrahler für Infrarotstrahlung mit einer flächigen Strahleranordnung von zwei oder mehr Heizstrahlern und einem, einer Abstrahlseite gegenüberliegenden Reflektor.

Die DE 10 2011 012363 A1 beschreibt einen Flächenstrahler für Infrarotstrahlung wobei die Strahlerrohre mittels eines Fixierungsmittels fixiert sind. Dabei dient ein opakes Quarzglas gleichzeitig als Reflektor und als Fixierungsmittel.

### Technische Aufgabenstellung

Die opake Quarzglasschicht ist als diffuser Reflektor für Strahlung über einen weiten Wellenlängenbereich einsetzbar. Sie zeichnet sich durch hohe Temperaturbeständigkeit bis etwa 1000°C und eine hohe Reflektivität im Wellenlängenbereich unterhalb von 2,2 µm aus. Im längerwelligeren Bereich ist ihre Reflektivität für die von der Strahlenquelle emittierten Primärstrahlung aber deutlich niedriger als die des Goldreflektors.

Ein Ziel der Erfindung ist daher, bei einem optischen Bauteil mit einer Reflektorschicht aus opakem Quarzglas die reflektierte optische Leistung zu erhöhen.

Außerdem liegt der Erfindung die Aufgabe zugrunde, ein Verfahren anzugeben, mittels dem ein derartiges Strahlerbauteil zuverlässig und reproduzierbar hergestellt werden kann.

### Zusammenfassung der Erfindung

Diese Aufgabe wird hinsichtlich der Herstellung des Strahlerbauteils durch ein Verfahren gelöst, das die folgenden Verfahrensschritte umfasst:
(a) Bereitstellen eines Basiskörpers mit einer Oberfläche, die mindestens teilweise mit einer Reflektorschicht aus opakem Glas belegt ist,
(b) Verdichten eines Oberflächenbereichs der Reflektorschicht aus opakem Glas,
(c) Aufbringen einer spiegelnd reflektierenden Reflektorschicht auf mindestens einem Teil des verdichteten Oberflächenbereichs.

Der mit der Reflektorschicht belegte Basiskörper ist beispielsweise ein optischer Strahler oder ein Bestandteil eines optischen Strahlers oder er ist mit dem optischen Strahler verbunden. Oder der Basiskörper bildet einen separaten Reflektor und wird in Verbindung mit einem optischen Strahler eingesetzt oder er ist ein Bestandteil eines derartigen Reflektors.

Der optische Strahler gibt Primärstrahlung in einer Hauptausbreitungsrichtung ab.

Mindestens ein Teil der Oberfläche des Basiskörpers, die der Hauptausbreitungsrichtung der Primärstrahlung gegenüberliegt, ist als Reflektor ausgebildet und zu diesem Zweck mit einer Reflektorschicht aus opakem Glas belegt. Diese Reflektorschicht wird im Folgenden auch kurz als "Opakschicht" bezeichnet. Eine diffus reflektierende Reflektorschicht aus opakem Quarzglas ist beispielsweise unter der Bezeichnung "QRC" bekannt und im Handel erhältlich. Die Opakschicht zeichnet sich durch eine hervorragende chemische und thermische Beständigkeit und mechanische Festigkeit aus. Besonders hervorzuheben ist die hohe Temperaturwechselbeständigkeit der Opakschicht, insbesondere wenn sie aus Quarzglas oder aus Borosilikatglas besteht.

Beim erfindungsgemäßen Verfahren wird mindestens ein Teil der Oberfläche der Opakschicht von einer weiteren Reflektorschicht belegt, die spiegelnd reflektiert. Diese Reflektorschicht wird im Folgenden auch kurz als "Spiegelschicht" bezeichnet. Spiegelnde Reflexion ist beispielsweise durch eine Metallschicht erreichbar, die bei anspruchsvollen Anwendungen als edelmetallhaltige Schicht, insbesondere als Goldschicht oder goldhaltige Schicht ausgeführt sein kann. Das gemäß des erfindungsgemäßen Verfahrens erstellte Strahlerbauteil verfügt somit über einen mehrlagigen Reflektor mit einer inneren Reflektorschicht aus opakem Glas und einer äußeren, spiegelnd reflektierenden Reflektorschicht aus Metall, wobei die beiden Reflektorschichten an einem verdichteten Glasbereich, der Teil der Opakschicht ist, aneinandergrenzen.

Die in Verfahrensschritt (a) bereitgestellte Opakschicht hat typischerweise anfänglich eine offenporige Oberfläche. Ein Oberflächenbereich der Opakschicht wird vorab verdichtet, bevor darauf die Spiegelschicht aufgebracht wird. Das Verdichten kann durch mechanischen Druck oder Infiltrieren eines Dichtmittels erfolgen, vorzugsweise geschieht es aber thermisch durch Erhitzen des Basiskörpers oder vorzugsweise nur des zu verdichtenden Oberflächenbereichs der Opakschicht.

Der verdichtete Oberflächenbereich weist vorzugsweise nur wenige, idealerweise keine, offenen Poren mehr auf. Eine offenporige Oberfläche zeigt sich darin, dass sie saugfähig ist, was anhand eines Farbeindringtests oder mittels Quecksilberporosimetrie nachweisbar ist. Das Fehlen offener Poren zeigt sich darin, dass die geschlossenporige Oberfläche nicht saugfähig ist.

Die Herstellung der Spiegelschicht erfolgt in der Regel durch Aufbringen einer metallhaltigen Emulsion (häufig handelt es sich dabei um ein metallhaltiges Resinat), die anschließend durch Erhitzen eingebrannt wird. Aufgabe des verdichteten Oberflächenbereichs ist es, beim Erzeugen der Spiegelschicht ein Eindringen von Schicht-Komponenten oder von Ausgangssubstanzen für ihre Herstellung zu vermeiden. Für diesen Zweck genügt eine geringe Schichtstärke im Bereich weniger Mikrometer. Herstellungsbedingt sind Schichtstärken des verdichteten Oberflächenbereichs bis zu 500 µm möglich. Bevorzugt sind jedoch dünnere Schichten von weniger als 300 µm, und besonders bevorzugt weniger als 150 µm.

Der thermisch verdichtete Oberflächenbereich bildet insoweit einen geschlossenen "Glasfilm" und wird im Folgenden auch so bezeichnet. Wird dieser mit einer metallhaltigen Emulsion beschichtet und wird die Emulsion anschließend durch Erhitzen eingebrannt, so ist das Resultat eine geschlossene, glänzende Reflektorschicht, beispielsweise eine metallisch glänzende Goldschicht.

Das so hergestellte Bauteil verfügt somit über einen mehrlagigen Reflektor, der sich zusammensetzt aus einer inneren Reflektorschicht aus opakem Glas einer ersten Porosität, einem Glasfilm in Form eines Übergangsbereichs aus Glas mit einer zweiten, niedrigeren Porosität, und einer äußeren, spiegelnd reflektierenden Reflektorschicht. Die innere Reflektorschicht aus opakem Glas reflektiert diffus wenn beispielsweise die Opazität maßgeblich auf Poren beruht.

Die äußere Spiegelschicht unterbindet die Transmission von Primärstrahlung durch die innere Opakschicht und bewirkt deswegen einen insgesamt höheren Reflexionsgrad für die Primärstrahlung als nur allein die Opakschicht. Das Strahlerbauteil mit mehrlagigem Reflektor zeigt bereits deswegen im Vergleich zu einem Strahlerbauteil mit nur diffus reflektierender Reflektorschicht eine höhere in Hauptausbreitungsrichtung abgestrahlte optische Leistungsdichte.

Darüber hinaus hat es sich gezeigt, dass die Opakschicht einen Teil der Primärstrahlung absorbiert und sich dadurch erhitzt. Mit zunehmender Temperatur infolge von Absorption der Primärstrahlung nimmt eine ungerichtete Emission von Sekundärstrahlung aus der Opakschicht zu, deren Peakwellenlänge beispielsweise bei Temperaturen von mehr als 600°C im Wellenlängenbereich oberhalb von 2,5 µm liegt. In diesem Wellenlängenbereich hat die Spiegelschicht ein hohes Reflexionsvermögen und ein geringes Emissionsvermögen und strahlt daher selbst weniger Sekundärstrahlung ab. Sie richtet die Emission der Sekundärstrahlung daher insgesamt in Hauptausbreitungsrichtung der Primärstrahlung, wodurch sich Strahlungs- und Energieverluste zusätzlich vermindern.

Insgesamt wird die Resttransparenz der Opakschicht unterbunden und deren Sekundäremission verringert. Die nach hinten - entgegen der Hauptausbreitungsrichtung der Primärstrahlung - abgestrahlte Leistung wird daher reduziert, wohingegen die nach vorne - in Hauptausbreitungsrichtung der Primärstrahlung - abgestrahlte Leistung ansteigt, so dass sich Strahlungs- und Energieverluste zusätzlich vermindern.

Andererseits hat es sich gezeigt, dass die Spiegelschicht auf dem verdichteten Oberflächenbereich der Opakschicht gut haftet. Ohne an eine Erklärung gebunden sein zu wollen, kann dieser Effekt darauf beruhen, dass die Opakschicht wegen ihrer Wirkung als thermischer Isolator die Spiegelschicht vor Hitze abschirmt, oder dass deren Haftung an der Oberfläche des (durch Sintern) verdichteten Oberflächenbereichs besser ist, als an einer durch Schmelzen erzeugten Glas-Oberfläche.

Jedenfalls scheinen beim mehrlagigen Reflektor sowohl die Opakschicht als auch die Spiegelschicht von der Wirkung und Gegenwart der jeweilig anderen Reflektorschicht zu profitieren, was sich in einer besseren Performance des Strahlerbauteils in Bezug auf Strahlungseffizienz und Lebensdauer zeigt.

Besonders bewährt hat sich eine Verfahrensvariante, bei der das Verdichten des Oberflächenbereichs durch Erhitzen auf eine Erhitzungstemperatur von mindestens 1.100 °C während einer Erhitzungsdauer von mindestens 5 Sekunden erfolgt.

Das Erhitzen kann in einem Ofen geschehen, bevorzugt geschieht es aber durch "Feuerpolieren". Beim Feuerpolieren wird der Oberflächenbereich mittels Laser, Plasma oder Brennerflamme kurzzeitig lokal auf sehr hohe Temperaturen erhitzt. Das opake, poröse Grundmaterial wird dabei in einem oberflächennahen Bereich durch Sintern oder Verglasen in dichteres Glas umgewandelt.

Beim weiteren Erhitzen wirkt der bereits verdichtete Oberflächenbereich als effektiver Wärmeisolator, der eine Temperaturbeaufschlagung des darunter liegenden, noch opaken Volumenbereichs behindert. Das hat zum einen die Folge, dass unterhalb des verdichteten Oberflächenbereichs ein nicht oder weniger verdichteter Volumenbereich der opaken Reflektorschicht verbleibt, und dass bewirkt zum anderen, dass ohne besonders drastisches Erhitzen nur eine dünne, verdichtete Oberflächenschicht zu erzeugen ist, was für die Erfindung jedoch ausreichend ist.

Die beiden Parameter "Erhitzungstemperatur" und "Erhitzungsdauer" bedingen sich gegenseitig. Ist der eine Parameter niedrig, so kann dennoch das gewünschte Erhitzungsergebnis erzielt werden, wenn der andere Parameter groß ist. Das gewünschte Erhitzungsergebnis, ist ein verdichteter Oberflächenbereich. Der verdichtete Oberflächenbereich hat idealerweise keine offene Porosität mehr; er ist vollständig geschlossen und nicht saugfähig, was durch einen Farbeindringtest oder mittels Quecksilberporosimetrie nachweisbar ist.

Die Spiegelschicht wird üblicherweise aus einem Metall erzeugt. Für anspruchsvolle Anwendungen des Bauteils in korrosiver Umgebung und bei hohen Temperaturen wird die spiegelnd reflektierende Reflektorschicht vorzugsweise aus einem goldhaltigen Metall oder aus Gold erzeugt.

Die Dicke der Spiegelschicht liegt je nach Anforderung an den Reflexionsgrad vorzugsweise im Bereich von 50 nm bis 300 nm. Je dicker die Schicht ist, umso höher ist der Reflexionsgrad.

Die Dicke der Reflektorschicht aus opakem Glas liegt je nach Anforderung vorzugsweise im Bereich von 0,5 mm bis 2 mm.

Bei einem Fokus auf einer hohen Lebensdauer der Strahlerbauteils, einer Ausbildung eines möglichst flachen Temperaturgradienten innerhalb der Reflektorschicht und einer effektiven Wirkung der Opakschicht als thermischer Isolator gegenüber der Spiegelschicht wird eine vergleichsweise große Dicke eingestellt. Eine Dicke im niedrigen Bereich wird eingestellt, wenn der Fokus auf hoher Reflektivität durch einen möglichst effektiven Beitrag der Spiegelschicht liegt.

Dabei ist es in der Regel wünschenswert, dass die anfängliche opake, diffus reflektierende Reflektorschicht auch nach dem Verdichten noch ein gewisses Volumen beibehält. Daher wird vorzugsweise beim Verdichten gemäß Verfahrensschritt (b) ein Oberflächenbereich gebildet wird, der weniger als 50%, vorzugsweise weniger als 20%, der anfänglichen Dicke der Reflektorschicht aus opakem Glas (vor Beginn des Verdichtens) beträgt.

Das erfindungsgemäße Verfahren eignet sich nicht nur zur werksseitigen Einstellung der Reflektivität des Strahlerbauteils, sondern es kann auch einfach nachträglich an Strahlerbauteilen vorgenommen werden, die sich bereits im Einsatz befinden. Für eine dementsprechende Nachrüstung umfasst das Bereitstellen des Basiskörpers gemäß Verfahrensschritt (a) eine Maßnahme, bei der ein im Einsatz befindliches Strahlerbauteil mit Reflektorschicht aus opakem Glas demontiert und anhand der Verfahrensschritte (b) und (c) nachbearbeitet wird.

Hinsichtlich des Strahlerbauteils wird die oben angegebene technische Aufgabe erfindungsgemäß dadurch gelöst, dass es einen Basiskörper aufweist, dessen Oberfläche mindestens teilweise mit einem Reflektor belegt ist, der eine innere Reflektorschicht aus mindestens teilweise opakem Glas und eine äußere, spiegelnd reflektierende Reflektorschicht umfasst, wobei zwischen der inneren Reflektorschicht und der äußeren Reflektorschicht ein geschlossener Glasfilm angeordnet ist.

Der mit der Reflektorschicht belegte Basiskörper ist beispielsweise ein optischer Strahler oder ein Bestandteil eines optischen Strahlers oder er ist mit dem optischen Strahler verbunden. Oder der Basiskörper bildet einen separaten Reflektor und wird in Verbindung mit einem optischen Strahler eingesetzt oder er ist ein Bestandteil eines derartigen Reflektors.

Der optische Strahler gibt Primärstrahlung in einer Hauptausbreitungsrichtung ab.

Mindestens ein Teil der Oberfläche des Basiskörpers, die der Hauptausbreitungsrichtung der Primärstrahlung gegenüberliegt, ist als Reflektor ausgebildet und mit einer Reflektorschicht aus opakem Glas belegt ("Opakschicht").

Die Opakschicht zeichnet sich durch eine hervorragende chemische und thermische Beständigkeit und mechanische Festigkeit aus. Besonders hervorzuheben ist die hohe Temperaturwechselbeständigkeit der Opakschicht, insbesondere wenn sie aus Quarzglas oder aus Borosilikatglas besteht. Außerdem ist mindestens ein Teil der Oberfläche der Opakschicht von einer weiteren Reflektorschicht belegt, die spiegelnd reflektiert ("Spiegelschicht").

Das erfindungsgemäße Strahlerbauteil verfügt somit über einen mehrlagigen Reflektor mit einer inneren Reflektorschicht aus opakem Glas und einer äußeren, spiegelnd reflektierenden Reflektorschicht, vorzugsweise aus Metall, wobei die beiden Reflektorschichten an einem verdichteten Glasbereich ("Glasfilm"), der Teil der Opakschicht ist, aneinandergrenzen.

Der Glasfilm ist vorzugsweise dicht und weist nur wenige, idealerweise keine Poren auf. Aufgabe des Glasfilms ist es, beim Erzeugen der Spiegelschicht ein Eindringen von Schicht-Komponenten oder von Ausgangssubstanzen für ihre Herstellung zu vermeiden. Für diesen Zweck genügt eine geringe Schichtstärke im Bereich weniger Mikrometer, beispielsweise ungefähr 10 µm.

Das erfindungsgemäße Strahlerbauteil verfügt somit über einen mehrlagigen Reflektor, der sich zusammensetzt aus einer inneren Reflektorschicht aus opakem Glas einer ersten Porosität, einem Glasfilm in Form eines Übergangsbereichs aus Glas mit einer zweiten, niedrigeren Porosität und besonders bevorzugt ohne Porosität, und einer äußeren, spiegelnd reflektierenden Reflektorschicht.

Die äußere Spiegelschicht unterbindet die Transmission von Primärstrahlung durch die innere Opakschicht und bewirkt deswegen einen insgesamt höheren Reflexionsgrad für die Primärstrahlung als nur allein die Opakschicht. Das Strahlerbauteil mit mehrlagigem Reflektor zeigt daher im Vergleich zu einem Strahlerbauteil mit nur diffus reflektierender Reflektorschicht eine höhere in Hauptausbreitungsrichtung abgestrahlte optische Leistungsdichte.

Die Opakschicht absorbiert einen Teil der Primärstrahlung und erhitzt sich dadurch. Mit zunehmender Temperatur infolge von Absorption der Primärstrahlung nimmt eine ungerichtete Emission von Sekundärstrahlung aus der Opakschicht zu, deren Peakwellenlänge beispielsweise bei Temperaturen von mehr als 600°C im Wellenlängenbereich oberhalb von 2,5 µm liegt. In diesem Wellenlängenbereich hat die Spiegelschicht ein hohes Reflexionsvermögen und ein geringes Emissionsvermögen und strahlt daher selbst weniger Sekundärstrahlung ab. Sie richtet die Emission der Sekundärstrahlung daher insgesamt in Hauptausbreitungsrichtung der Primärstrahlung, wodurch sich Strahlungs- und Energieverluste zusätzlich vermindern.

Insgesamt wird die Resttransparenz der Opakschicht unterbunden und deren Sekundäremission verringert. Die nach hinten - entgegen der Hauptausbreitungsrichtung der Primärstrahlung - abgestrahlte Leistung wird reduziert, wohingegen die nach vorne - in Hauptausbreitungsrichtung der Primärstrahlung - abgestrahlte Leistung ansteigt, so dass sich Strahlungs- und Energieverluste zusätzlich vermindern.

Die Spiegelschicht zeigt ein gutes Haftungsvermögen auf dem Glasfilm. Dieser Effekt kann darauf beruhen, dass die Opakschicht wegen ihrer Wirkung als thermischer Isolator die Spiegelschicht vor Hitze abschirmt, oder dass deren Haftung an der Oberfläche des (durch Sintern) verdichteten Glasfilms besser ist, als an einer durch Schmelzen erzeugten Glas-Oberfläche.

Jedenfalls scheinen beim mehrlagigen Reflektor sowohl die Opakschicht als auch die Spiegelschicht von der Wirkung und Gegenwart der jeweilig anderen Reflektorschicht zu profitieren, was sich in einer besseren Performance des Strahlerbauteils in Bezug auf Strahlungseffizienz und Lebensdauer zeigt.

Die Spiegelschicht besteht üblicherweise aus einem Metall. Für anspruchsvolle Anwendungen des Strahlerbauteils in korrosiver Umgebung und bei hohen Temperaturen besteht die spiegelnd reflektierende Reflektorschicht vorzugsweise aus einem goldhaltigen Metall oder aus Gold.

Die Dicke der Spiegelschicht liegt je nach Anforderung an den Reflexionsgrad vorzugsweise im Bereich von 50 nm bis 300 nm. Je dicker die Schicht ist, umso höher ist der Reflexionsgrad.

Die Dicke der Reflektorschicht aus opakem Glas liegt je nach Anforderung vorzugsweise im Bereich von 0,5 mm bis 2 mm.

Bei einem Fokus auf einer hohen Lebensdauer der Strahlerbauteils, einer Ausbildung eines möglichst flachen Temperaturgradienten innerhalb der Reflektorschicht und einer effektiven Wirkung der Opakschicht als thermischer Isolator gegenüber der Spiegelschicht wird eine vergleichsweise große Dicke bevorzugt. Bei einer Dicke im niedrigen Bereich liegt der Fokus eher auf hoher Reflektivität durch einen möglichst effektiven Beitrag der Spiegelschicht.

Bei besonders bevorzugten Ausführungsformen des Strahlerbauteils ist der Basiskörper als Hüllkörper für die Aufnahme eines Strahlungsemitters ausgebildet, wobei der Reflektor auf der dem Strahlungsemitter abgewandten Außenseite Hüllkörpers angeordnet ist, oder der Basiskörper ist als kachelförmiger Strahlungsemitter ausgebildet, wobei der Reflektor auf einer Kachel-Planseite angeordnet ist.

Bei der erstgenannten Ausführungsform hat der Hüllkörper für die Aufnahme eines Strahlungsemitters hat die Form eines Kolbens oder er ist rohrförmig und hat einen beliebigen, insbesondere runden oder ovalen, Querschnitt. Es können mehrere rohrförmige Hüllkörper mit ihren Längsachsen parallel zueinander ausgerichtet sein und beispielsweise einen flächigen Strahler bilden. Der Reflektor ist hierbei auf der dem Strahlungsemitter abgewandten Außenseite Hüllkörpers angeordnet.

Der Hüllkörper umhüllt hierbei einen Strahlungsemitter, wie beispielsweise eine Heizwendel, ein Carbonband oder eine Strahlung emittierende Gasfüllung, und gleichzeitig ist ein Teil des Hüllkörpers mit einer als Reflektor wirkenden Schicht aus dem opaken Glas versehen.

Bei der zweitgenannten Ausführungsform ist der Basiskörper als kachelförmiger Strahlungsemitter ausgebildet, wobei der Reflektor aus opakem Glas auf einer der Kachel-Planseiten angeordnet ist, die der Hauptausbreitungsrichtung der Primärstrahlung gegenüberliegt.

Das Strahlerbauteil wird vorzugsweise in der Lampen- und Reflektorfertigung eingesetzt, wobei es in Form eines Rohres, Kolbens, einer Kammer, Halbschale, Kugel- oder Ellipsoid-Segment, Platte, Hitzeschildes oder dergleichen vorliegt.

### Definitionen

### Strahlerbauteil

Das Strahlerbauteil umfasst einen Basiskörper, dessen Oberfläche mindestens zum Teil mit einer Reflektorschicht aus opakem Glas belegt ist. Der Basiskörper ist beispielsweise ein optischer Strahler oder ein Reflektor-Bauteil.

### Reflektorschicht aus opakem Glas

Die Reflektorschicht bedeckt den Basiskörper ganz oder teilweise. Sie besteht vorzugsweise aus mindestens teilweise opakem Quarzglas. Sie kann eine diffuse, ungerichtete Reflexion an Phasengrenzen bewirken. Durch eine gekrümmte oder gewölbte Geometrie des Basiskörpers kann der diffusen Reflexion ein gerichteter Anteil aufgeprägt werden.

### Ausführungsbeispiel

Nachfolgend wird die Erfindung anhand von Ausführungsbeispielen und einer Zeichnung näher erläutert. Dabei zeigt im Einzelnen
- **Figur 1**: in schematischer Darstellung und im Querschnitt eine Ausführungsform eines erfindungsgemäßen Strahlerbauteils in Form eines Infrarotstrahlers mit einem Hüllrohr, dessen Oberseite partiell mit einer Reflektorschicht bedeckt ist,
- **Figur 2**: ein Foto eines kurzwelligen Zwillingsrohr-Infrarotstrahlers mit einer QRC-Reflektorschicht, die nachträglich (nach Inbetriebnahme des Infrarotstrahlers) anhand des erfindungsgemäßen Verfahrens mit einem Gold-Reflektor belegt worden ist, und
- **Figur 3**: ein Diagramm mit dem Ergebnis von Radialmessungen der Abstrahlung von Infrarotstrahlern mit und ohne spiegelnd reflektierender Reflektorschicht im Vergleich.

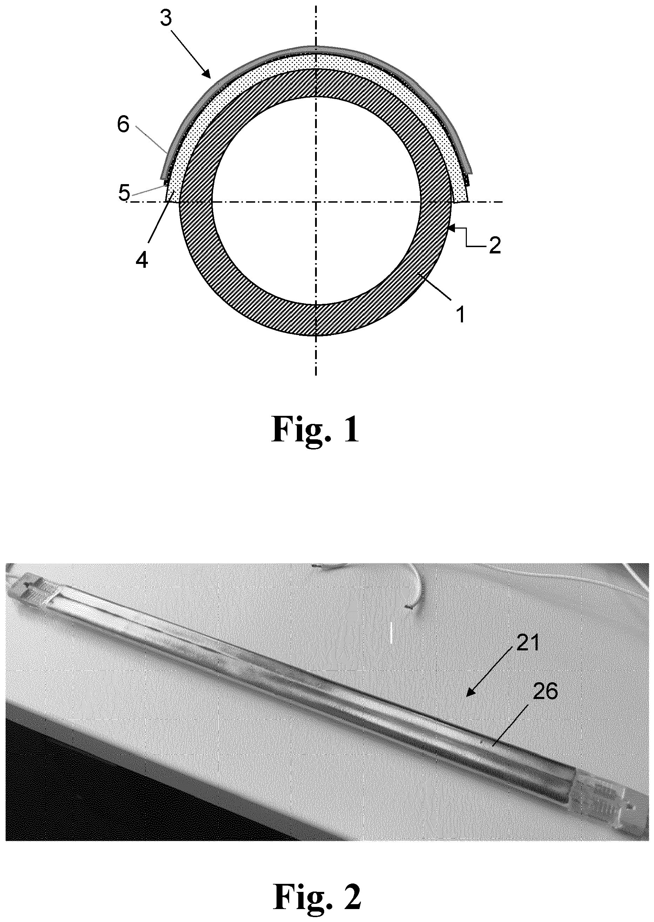

**Figur 1** zeigt schematisch ein horizontal Lampenrohr 1 aus Quarzglas im Querschnitt, dessen Außenmantelfläche 2 etwa halbseitig mit einem Reflektor 3 belegt ist. Der Reflektor 3 setzt sich zusammen aus einer inneren, diffus reflektierenden Reflektorschicht (Opakschicht 4), einer Zwischenschicht in Form eines thermisch verdichteten Oberflächenbereichs der Opakschicht 4 (Glasfilm 5) und einer äußeren spiegelnd reflektierenden Reflektorschicht (Spiegelschicht 6). Die Darstellung ist nicht maßstäblich; insbesondere sind die Dicken von Glasfilm 5 und Spiegelschicht 6 aus Gründen der besseren Erkennbarkeit überaus dick dargestellt.

Im Folgenden wird eine bevorzugte Verfahrensweise zur Herstellung des Reflektors 3 näher erläutert:
Die Herstellung der Opakschicht 4 auf der Außenmantelfläche 2 des Hüllrohres 1 erfolgt nach dem bekannten, in der DE 10 2004 051 846 A1 beschriebenen Schlickerverfahren. Dabei wird der gießfähige, wässriger SiO₂-Schlicker als Schlickerschicht auf der Oberseite des Hüllrohres 1 aufgetragen, die Schlickerschicht anschließend getrocknet und unter Ausbildung der Opakschicht 4 verglast. Die so erhaltene Opakschicht 4 besteht aus porenhaltigem, opakem Quarzglas. Sie hat eine mittlere Schichtdicke um 2 mm und eine Dichte von etwa 2,15 g/cm³. Ihre Oberfläche ist offenporig, wie ein Farbeindringtest zeigt.

### Vergleichsbeispiel

In ersten Versuchen wurde die offenporige Oberfläche mit einer goldhaltigen Emulsion (Goldresinat) getränkt. Die Emulsion drang dabei in die offenen Poren der Oberfläche ein wurde anschließend durch Erhitzen eingebrannt. Beim Einbrennen zerfällt das Goldresinat in metallisches Gold und Harzsäure, die ihrerseits, wie auch die übrigen Komponenten der Paste, durch die hohe Einbrenntemperatur verflüchtigt werden. Dabei ergab sich aber wider Erwarten keine geschlossene, spiegelnde Metallschicht, beispielsweise eine Edelmetallschicht; vielmehr verfärbte sich die Masse beim Einbrennen schwarz.

### Beispiel

In weiteren Versuchen wurde die Oberfläche der Opakschicht 4 vorab thermisch verdichtet, bevor darauf die Spiegelschicht 6 aufgebracht wird. Das thermische Verdichten erfolgt durch Erhitzen der Opakschicht 4 mit einem Knallgasbrenner. Dadurch werden lokal sehr hohe Temperaturen um 1800 °C erzeugt, was die Herstellung eines möglichst dünnen Verdichtungsbereichs (Glasfilms 5) innerhalb weniger Sekunden ermöglicht. Der Glasfilm 5 hat lediglich die Funktion der Versiegelung der Oberfläche der Opakschicht 4 und wird so dünn wie möglich gehalten und nur so dick wie nötig zur Erfüllung dieser Funktion. Die Dicke beträgt ungefähr 200 µm, maximal jedoch 500 µm. Seine Oberfläche ist danach dicht und hat keine offene Porosität, wie ein Farbeindringtest zeigt. Zur Verminderung mechanischer Spannungen wird das Hüllrohr 1 anschließend in einem Ofen getempert. Das Temperprogramm umfasst ein Erhitzen auf eine Temperatur um 1050 °C für eine Zeit von mindestens 3 Stunden.

Auf den Glasfilm 5 wird anschließend in üblicher Weise die Spiegelschicht 6 durch Druck-, Spritz-, Tauch- oder Streichtechnik aufgetragen. Im Ausführungsbeispiel wird auf den Glasfilm 5 mit einem Pinsel eine etwa 5 µm dicke Schicht einer Paste aufgebracht, die aus einer Lösung von Goldresinat in einem Dicköl unter geringen Zusätzen (~1%) von Resinaten von Glasbildnern zur Haftvermittlung besteht. Das Hüllrohr 1 mit der aufgebrachten Resinatschicht wird in einem Ofen auf eine Temperatur um 800°C gebracht. Bei dieser Wärmebehandlung zerfällt das Goldresinat in metallisches Gold und Harzsäure, die ihrerseits, wie auch die übrigen Komponenten der Paste, durch die hohe Einbrenntemperatur verflüchtigt werden. Auf dem Glasfilm verbleibt eine dünne, metallische Spiegelschicht 6 von etwa 0,1 µm Dicke. Die so erzeugte Spiegelschicht 6 (Goldschicht) zeigt keine Defekte und eine gute Haftung auf der thermisch verdichteten Glasschicht 5.

Anhand von **Figur 2** wird das Nachvergolden eines bereits im Einsatz befindlichen Strahlers mit einer Spiegelschicht 26 erläutert. Das Foto zeigt einen kurzwelligen Infrarotstrahler in Form eines sogenannten "Zwillingsrohr-Strahlers" 21, dessen Oberseite bei seiner Inbetriebnahme mit einem Reflektor in Form einer Opakschicht mit offenporiger Oberfläche versehen war. Zur Herstellung der Spiegelschicht 26 wurde der Zwillingsrohr-Strahler demontiert und anschließend die Oberfläche der Opakschicht thermisch verdichtet, wie oben erläutert, und abschließend mit einer Goldschicht versehen. Die Goldschicht zeigt keine Defekte und eine gute Haftung auf der thermisch verdichteten Opakschicht.

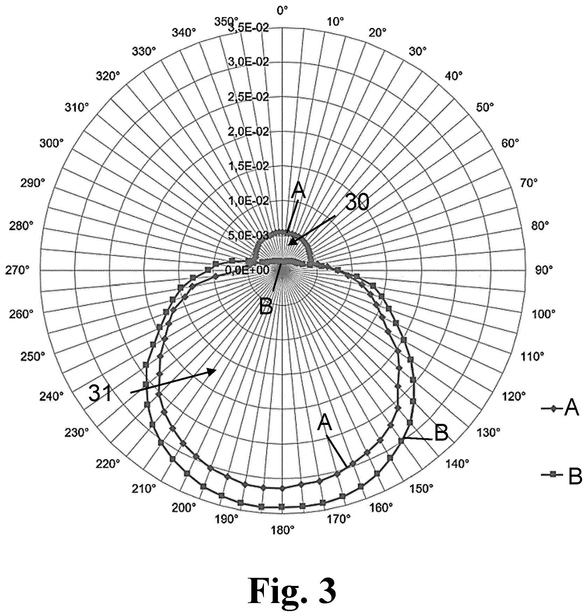

Um die Wirkung der zusätzlichen Spiegelschicht zu ermitteln, wurde die emittierte optische Leistungsdichte (Bestrahlungsstärke) an Infrarotstrahlern mit und ohne Spiegelschicht gemessen. Die Radialmessung erfolgt in üblicher Weise unter Einsatz eines auf einer drehbaren Halterung montierten Infrarotstrahlers, der in 5 Grad-Schritten um 360 Grad rotiert. Ein im Abstand von 20 cm montierter Thermopile-Sensor erfasst dabei die vom Infrarotstrahler emittierte Strahlung. Im Diagramm von **Figur 3** ist auf dem Kreisradius die normierte Bestrahlungsstärke (rel. Einheit) gegen die Umfangswinkelposition (in Grad) der Messpunkte aufgetragen. Die mit Rauten gekennzeichnete Messkurve A zeigt das Ergebnis der Radialmessung bei einem handelsüblichen, kurzwelligen Infrarotstrahler mit einer diffus reflektierenden Reflektorschicht ("QRC-Strahler" ), und die mit Rechtecken gekennzeichnete Messkurve B zeigt das Ergebnis der Radialmessung bei nachträglicher Beschichtung des QRC-Strahlers mit einer Goldschicht anhand des erfindungsgemäßen Verfahrens.

Im rückwärtigen Strahlerraum 30 zeigt die Messkurve A einen gewissen Anteil an Bestrahlungsintensität. Diese setzt sich zusammen aus transmittierter Primärstrahlung und aus Sekundärstrahlung, die auf die Aufheizung der Opakschicht und der deswegen diffus emittierten Sekundärstrahlung des QRC-Strahlers zurückzuführen ist. Bei der Messkurve B ist dieser Anteil nicht vorhanden oder zumindest deutlich kleiner als bei Messkurve A.

Im eigentlichen Bestrahlungsfeld 31 zeigt die Messkurve B hingegen eine höhere Bestrahlungsstärke als die Messkurve A. Dies ist darauf zurückzuführen, dass durch den Gold-Reflektor die nach hinten abgestrahlte Sekundärstrahlung verringert und stattdessen nach vorne gerichtet und dementsprechend die nach vorne abgestrahlte Leistung erhöht wird.

Durch den zusätzlichen Gold-Reflektor steigt die effektive Reflektivität des Infrarotstrahlers von 82% (Messkurve A) auf 91 % (Messkurve B) und die für den Heizprozess nutzbare Leistung um etwa 11% an. Diese Werte ergeben sich durch Integration der von den Messkurven A beziehungsweise B umschlossenen Flächen im Rückraum 30 beziehungsweise im Bestrahlungsfeld 31.

## Patentansprüche

1. Verfahren zur Herstellung eines Strahlerbauteils mit einem Reflektor (3; 4; 5; 6), umfassend die Verfahrensschritte:
(a) Bereitstellen eines Basiskörpers (1; 21) mit einer Oberfläche (2), die mindestens teilweise von einer Reflektorschicht (4) aus opakem Glas belegt ist,
(b) Verdichten eines Oberflächenbereichs (5) der Reflektorschicht (4) aus opakem Glas,
(c) Aufbringen einer spiegelnd reflektierenden Reflektorschicht (6) auf mindestens einem Teil des verdichteten Oberflächenbereichs (5).

2. Verfahren nach Anspruch 1, **dadurch gekennzeichnet, dass** das Verdichten des Oberflächenbereichs (5) durch Erhitzen auf eine Erhitzungstemperatur von mindestens 1.100 °C während einer Erhitzungsdauer von mindestens 5 Sekunden.

3. Verfahren nach Anspruch 1 oder 2, **dadurch gekennzeichnet, dass** die spiegelnd reflektierende Reflektorschicht (6) aus einem Metall erzeugt wird.

4. Verfahren nach Anspruch 3, **dadurch gekennzeichnet, dass** die spiegelnd reflektierende Reflektorschicht (6) aus einem goldhaltigen Metall oder aus Gold erzeugt wird, und eine Schichtdicke im Bereich von 50 bis 300 nm aufweist.

5. Verfahren nach einem der vorhergehenden Ansprüche, **dadurch gekennzeichnet, dass** die Reflektorschicht (4) aus opakem Glas mit einer Dicke im Bereich von 0,5 mm bis 2 mm bereitgestellt wird.

6. Verfahren nach Anspruch 5, **dadurch gekennzeichnet, dass** beim Verdichten gemäß Verfahrensschritt (b) ein Oberflächenbereich (5) gebildet wird, der weniger als 50% der Dicke der Reflektorschicht (4) aus opakem Glas beträgt.

7. Verfahren nach einem der vorhergehenden Ansprüche, **dadurch gekennzeichnet, dass** das Bereitstellen des Basiskörpers gemäß Verfahrensschritt (a) eine Maßnahme umfasst, bei der ein im Einsatz befindliches Strahlerbauteil (21) mit einer Reflektorschicht aus opakem Glas demontiert und anhand der Verfahrensschritte (b) und (c) nachbearbeitet wird.

8. Strahlerbauteil mit einem Basiskörper (1; 21), dessen Oberfläche (2) mindestens teilweise mit einem Reflektor (3) belegt ist, der eine innere Reflektorschicht (4) aus mindestens teilweise opakem Glas und eine äußere, spiegelnd reflektierende Reflektorschicht (6) umfasst, wobei zwischen der inneren Reflektorschicht (4) und der äußeren Reflektorschicht (6) ein geschlossener Glasfilm (5) angeordnet ist.

9. Strahlerbauteil nach Anspruch 8, **dadurch gekennzeichnet, dass** der Glasfilm (6) eine Stärke von weniger als 300 µm, bevorzugt weniger als 150 µm, hat.

10. Strahlerbauteil nach Anspruch 8 oder 9, **dadurch gekennzeichnet, dass** die spiegelnd reflektierende Reflektorschicht (6) aus einem Metall besteht, vorzugsweise aus einem goldhaltigen Metall oder aus Gold, und dass sie eine Schichtdicke im Bereich von 50 bis 300 nm aufweist.

11. Strahlerbauteil nach einem der Ansprüche 8 bis 10, **dadurch gekennzeichnet, dass** die Reflektorschicht (4) aus opakem Glas mit einer Dicke im Bereich von 0,5 mm bis 2 mm bereitgestellt wird.

12. Strahlerbauteil nach einem der vorhergehenden Ansprüche, **dadurch gekennzeichnet, dass** der Basiskörper (1; 21) als Hüllkörper für die Aufnahme eines Strahlungsemitters ausgebildet ist, wobei der Reflektor (3) auf der dem Strahlungsemitter abgewandten Außenseite des Hüllkörpers angeordnet ist, oder dass der Basiskörper als kachelförmiger Strahlungsemitter ausgebildet ist, wobei der Reflektor auf einer Kachel-Planseite angeordnet ist.

## Claims

1. A method for manufacturing a radiator component with a reflector (3; 4; 5; 6), comprising the method steps:
(a) providing a base body (1; 21) with a surface (2) which is at least partially covered by a reflector layer (4) of opaque glass,
(b) compacting a surface region (5) of the reflector layer (4) of opaque glass, and
(c) applying a specularly reflective reflector layer (6) to at least a portion of the compacted surface region (5).

2. The method according to claim 1, **characterized in that** the compaction of the surface region (5) is performed by heating to a heating temperature of at least 1,100 °C for a heating time of at least 5 seconds.

3. The method according to claim 1 or 2, **characterized in that** the specularly reflective reflector layer (6) is produced from a metal.

4. The method according to claim 3, **characterized in that** the specularly reflective reflector layer (6) is produced from a gold-containing metal or from gold and has a layer thickness in the range from 50 to 300 nm.

5. The method according to any one of the preceding claims, **characterized in that** the reflector layer (4) is made of opaque glass with a thickness in the range from 0.5 mm to 2 mm.

6. The method according to claim 5, **characterized in that**, during compaction according to method step (b), a surface region (5) is formed which is less than 50% of the thickness of the reflector layer (4) of opaque glass.

7. The method according to any one of the preceding claims, **characterized in that** the provision of the base body according to method step (a) comprises a measure in which a radiator component (21) which is in use and has a reflector layer of opaque glass is dismantled and post-processed based on method steps (b) and (c).

8. A radiator component with a base body (1; 21) whose surface (2) is at least partially covered with a reflector (3) that comprises an inner reflector layer (4) made of at least partially opaque glass and an outer, specularly reflective reflector layer (6), a continuous glass film (5) being arranged between the inner reflector layer (4) and the outer reflector layer (6).

9. The radiator component according to claim 8, **characterized in that** the glass film (6) has a thickness of less than 300 µm, preferably less than 150 µm.

10. The radiator component according to claim 8 or 9, **characterized in that** the specularly reflective reflector layer (6) consists of a metal, preferably of a gold-containing metal or of gold, and that it has a layer thickness in the range from 50 to 300 nm.

11. The radiator component according to any one of claims 8 to 10, **characterized in that** the reflector layer (4) is made of opaque glass with a thickness in the range from 0.5 mm to 2 mm.

12. The radiator component according to any one of the preceding claims, **characterized in that** the base body (1; 21) is embodied as a casing body for receiving a radiation emitter, the reflector (3) being arranged on the outer side of the casing body facing away from the radiation emitter, or that the base body is embodied as a tile-shaped radiation emitter, the reflector being arranged on a tile flat side.

## Revendications

1. Procédé de fabrication d'un composant émetteur avec un réflecteur (3 ; 4 ; 5 ; 6), comprenant les étapes suivantes :
(a) mise à disposition d'un corps de base (1 ; 21) avec une surface (2), qui est occupée au moins partiellement par une couche réfléchissante (4) en verre opaque,
(b) compression d'une partie de la surface (5) de la couche réfléchissante (4) en verre opaque,
(c) application d'une couche réfléchissante à réflexion spéculaire (6) sur au moins une partie de la partie de surface (5) comprimée.

2. Procédé selon la revendication 1, **caractérisé en ce que** la compression de la partie de surface (5) est effectuée par chauffage à une température de chauffage d'au moins 1100 °C pendant une durée de chauffage d'au moins 5 secondes.

3. Procédé selon la revendication 1 ou 2, **caractérisé en ce que** la couche réfléchissante à réflexion spéculaire (6) est constituée d'un métal.

4. Procédé selon la revendication 3, **caractérisé en ce que** la couche réfléchissante à réflexion spéculaire (6) est constituée d'un métal contenant de l'or ou d'or et présente une épaisseur de couche de l'ordre de 50 à 300 nm.

5. Procédé selon l'une des revendications précédentes, **caractérisé en ce que** la couche réfléchissante (4) en verre opaque est réalisée avec une épaisseur de l'ordre de 0,5 mm à 2 mm.

6. Procédé selon la revendication 5, **caractérisé en ce que**, lors de la compression selon l'étape (b), une partie de surface (5) est formée, qui représente moins de 50 % de l'épaisseur de la couche réfléchissante (4) en verre opaque.

7. Procédé selon l'une des revendications précédentes, **caractérisé en ce que** la mise à disposition du corps de base selon l'étape (a) comprend une mesure pour laquelle un composant émetteur (21), utilisé, avec une couche réfléchissante en verre opaque, est démonté puis retouché à l'aide des étapes (b) et (c).

8. Composant émetteur avec un corps de base (1 ; 21) dont la surface (2) est occupée au moins partiellement par un réflecteur (3), qui comprend une couche réfléchissante interne (4), en verre au moins partiellement opaque, et une couche réfléchissante externe (6) à réflexion spéculaire, dans lequel, entre la couche réfléchissante interne (4) et la couche réfléchissante externe (6), est disposé un film de verre fermé (5).

9. Composant émetteur selon la revendication 8, **caractérisé en ce que** le film de verre (6) présente une épaisseur inférieure à 300 µm, de préférence inférieure à 150 µm.

10. Composant émetteur selon la revendication 8 ou 9, **caractérisé en ce que** la couche réfléchissante à réflexion spéculaire (6) est constituée d'un métal, de préférence d'un métal contenant de l'or ou d'or, et **en ce qu'**elle présente une épaisseur de couche de l'ordre de 50 à 300 nm.

11. Composant émetteur selon l'une des revendications 8 à 10, **caractérisé en ce que** la couche réfléchissante (4) est constituée d'un verre opaque avec une épaisseur de l'ordre de 0,5 à 2 mm.

12. Composant émetteur selon l'une des revendications précédentes, **caractérisé en ce que** le corps de base (1 ; 21) est conçu comme un corps d'enveloppe pour le logement d'un émetteur de rayonnement, dans lequel le réflecteur (3) est disposé sur la face externe du corps d'enveloppe opposée à l'émetteur de rayonnement ou **en ce que** le corps de base est conçu comme un émetteur de rayonnement en forme de tuile, dans lequel le réflecteur est disposé sur une face plane de la tuile.
